(19) Europäisches Patentamt
European Patent Office
Office européen des brevets

(11) **EP 2 178 288 B1**

(12) **FASCICULE DE BREVET EUROPEEN**

(45) Date de publication et mention
de la délivrance du brevet:
**12.08.2020 Bulletin 2020/33**

(51) Int Cl.:
***H04N 5/378*** *(2011.01)*  ***G01J 1/46*** *(2006.01)*

(21) Numéro de dépôt: **09305904.6**

(22) Date de dépôt: **28.09.2009**

(54) **Dispositif et procédé pour réaliser la lecture de courants électriques résultant d'un détecteur de signaux électromagnétiques**

Vorrichtung und Verfahren zur Ablesung von elektrischen Strömen, die von einem Detektor für elektromagnetische Signale erzeugt werden

Device and method for reading out electrical currents provided by an electromagnetic signal detector

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.10.2008 FR 0856990**

(43) Date de publication de la demande:
**21.04.2010 Bulletin 2010/16**

(73) Titulaire: **LYNRED**
**91120 Palaiseau (FR)**

(72) Inventeur: **Sanson, Eric**
**38000 Grenoble (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A-02/51130     WO-A-99/60777**
**FR-A- 2 915 833     US-B1- 6 297 492**
**US-B1- 6 410 901**

## Description

## DOMAINE DE L'INVENTION

La présente invention a trait au domaine de la conception de circuits intégrés réalisant la lecture du courant issu d'un capteur pendant un temps d'intégration pour stocker les charges correspondantes dans une capacité.

La présente invention concerne plus particulièrement un dispositif pour réaliser la lecture de courants électriques, tels que ceux générés dans les capteurs élémentaires d'un photo-détecteur matriciel lors des interactions entre photons et matière. En particulier, le dispositif - objet de la présente invention - peut être mis en œuvre pour convertir en valeurs numériques les grandeurs analogiques issues de détecteurs à infrarouges, et plus particulièrement de détecteurs bolométriques refroidis.

La présente invention se rapporte également à un procédé pour la lecture de courants électriques mis en œuvre par le dispositif objet de l'invention.

## ETAT ANTERIEUR DE LA TECHNIQUE

En général, pour lire le courant électrique issu d'un capteur, il faut procéder en deux phases, à savoir :

- une phase d'intégration, au cours de laquelle les charges mobiles issues du capteur sont dirigées vers un élément capacitif pour y être accumulées,
- et une phase de lecture proprement dite, au cours de laquelle l'élément capacitif est déchargé de manière à diriger les charges mobiles précédemment accumulées vers un étage de sortie, au sein duquel ledit courant, résultant des charges mobiles est traité.

Dans le cas particulier d'un capteur photosensible, les charges mobiles sont libérées au cours des interactions entre photons et matière qui surviennent au sein d'un élément photosensible composant le ou les capteurs élémentaires constitutifs du détecteur de rayonnements électromagnétiques. Les dispositifs électriques pour la lecture de tels courants jouent donc le rôle d'interface d'intégration entre les capteurs du détecteur et les étages de sortie, qui forment le circuit d'exploitation des signaux intégrés.

De l'art antérieur, on connaît différentes architectures pour réaliser un tel dispositif de lecture. Par dispositif de lecture, on entend, dans le cadre de la présente invention, l'étage d'entrée du circuit de lecture et d'exploitation des signaux délivrés par le détecteur.

En effet, de manière connue, un circuit de lecture et d'exploitation comprend un étage d'entrée directement relié au détecteur, et un étage de sortie recevant les signaux intégrés par cet étage d'entrée.

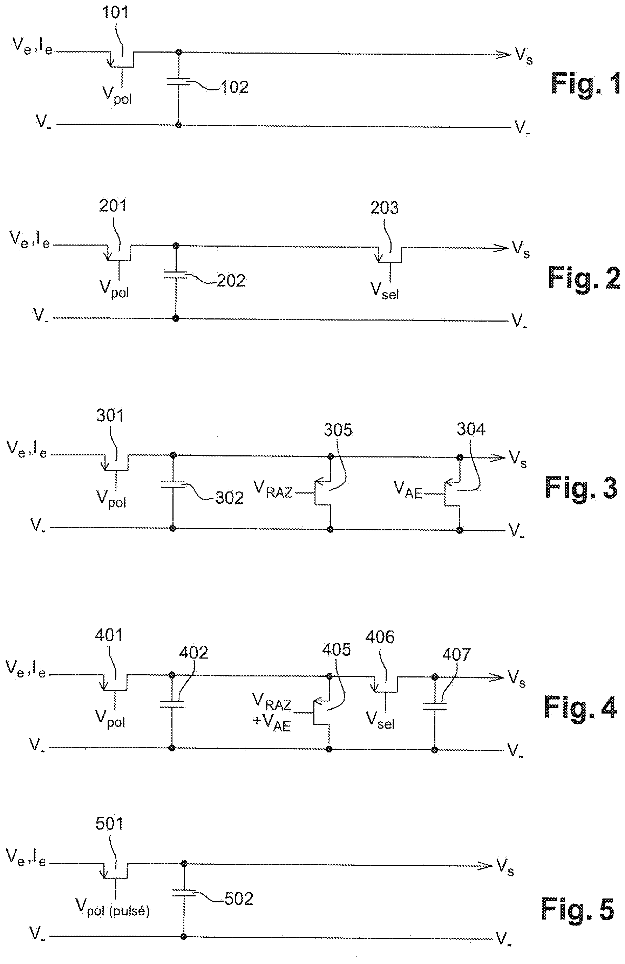

Parmi les dispositifs de lecture de l'état antérieur de la technique, on connaît le dispositif représenté sur la figure 1 et généralement appelé étage d'entrée à injection directe. Un tel dispositif de lecture ou étage d'entrée comprend un transistor de polarisation **101** et un élément capacitif d'intégration **102.**

Comme le montre la figure 1, la source du transistor **101** est connectée à la branche d'entrée destinée à injecter dans cet étage d'entrée un courant $I_e$ à lire, provenant par exemple d'une photodiode, soumis à un flux de rayonnement incident. Le drain du transistor **101** est quant à lui connecté à une borne de l'élément capacitif **102,** ainsi qu'à une borne reliée à l'étage de sortie. Ces trois bornes sont donc portés au potentiel de sortie $V_s$. L'autre borne de l'élément capacitif **102** est connecté à un potentiel de référence $V_-$, généralement le potentiel de la masse. De plus, la grille du transistor **101** est connectée à une source de tension de polarisation, qui détermine le niveau de polarisation du détecteur au travers du transistor **101.**

En fonctionnement, les charges mobiles libérées lors des interactions entre photons et matière survenant dans le capteur situé en amont de la branche d'entrée génèrent le courant à intégrer $I_e$ et elles s'accumulent sur l'élément capacitif **102.** Cette accumulation de charges correspond donc à la phase dite « d'intégration ».

En fin de phase d'intégration, l'élément capacitif d'intégration **102** peut être lu et déchargé. Le signal résultant est alors dirigé vers l'étage de sortie et le circuit d'exploitation. C'est la phase de « lecture » du courant proprement dite.

Une telle architecture est communément appelée étage d'entrée à injection directe. En fonction des applications, cette architecture peut être déclinée selon différentes variante.

La figure 2 illustre par exemple l'ajout d'un transistor de sélection **203** sur la branche de sortie de l'étage d'entrée représenté à la figure 1. Le transistor de sélection **203** permet de mettre en parallèle plusieurs étages d'entrée pour un même étage de sortie. Ainsi, le transistor **203** assure une fonction de sélection et il permet de réaliser le multiplexage de plusieurs étages d'entrée parallèles.

D'une manière générale, les concepteurs cherchent à miniaturiser le plus possible les composants des photodétecteurs de manière à en augmenter la résolution, donc le nombre de pixels rapporté à la surface d'image. Cette contrainte d'encombrement concerne non seulement les capteurs élémentaires eux-mêmes, mais également les circuits électroniques réalisant l'interface entre le détecteur et son circuit d'exploitation, à savoir les étages d'entrée et les étages de sortie.

Outre cette contrainte d'encombrement qui est primordiale, les photodétecteurs doivent généralement consommer le moins d'énergie possible et présenter des durées de réaction et d'intégration très courtes. Le problème de la consommation énergétique s'avère particulièrement important dans le cas des photodétecteurs refroidis, comme par exemple les détecteurs à diode pour le spectre de rayonnement infrarouge.

C'est pourquoi, on considère généralement que les circuits intégrés formant les dispositifs de lecture de courant doivent nécessairement comporter peu de composants électroniques et présenter une architecture relativement simple. Cela permet en effet de limiter leur encombrement et l'énergie qu'ils consomment, donc leur échauffement par effet joule.

Les circuits intégrés de l'état antérieur de la technique, tels que ceux illustrés par les figures 1 et 2, respectent ces contraintes d'encombrement et d'échauffement, mais doivent être complétés pour assurer les fonctionnalités de remise à zéro et de blocage de l'intégration.

Pour assurer la remise à zéro, il a été proposé de réaliser un étage d'entrée à injection directe, présentant l'architecture du circuit intégré illustré par la figure 3. A l'architecture de base du circuit de la figure 1, il est ajouté un transistor **305** dont la fonction est de remettre à zéro la capacité d'intégration **302** avant chaque phase d'intégration. Par ailleurs, dans le cadre de l'étage d'entrée représenté sur la figure 2, la capacité d'intégration **202** peut être remise à zéro lorsque l'étage d'entrée est sélectionné au moyen du transistor de sélection **203**.

Les étages d'entrée illustrés par les figures 1 et 2 présentent en outre l'inconvénient d'être sensibles à l'éblouissement, ce qui entraîne quand même une dépolarisation du capteur ou l'apparition d'un courant parasite dans le système de multiplexage. L'éblouissement se produit lorsque la source « chaude » détectée par le capteur est trop intense, et sature ledit capteur.

Il est par conséquent nécessaire d'ajouter un transistor anti-éblouissement **304** à de tels circuits intégrés, augmentant ainsi le nombre de composants électroniques, donc l'encombrement du dispositif de lecture.

Pour assurer le blocage de l'intégration, dans le cas des étages d'entrée présentés sur les figures 1, 2 et 3, une solution connue est l'échantillonnage du signal utile dans le pixel. Pour cela, on ajoute de manière connue un transistor **406** et un élément capacitif de mémorisation **407** de façon à échantillonner la tension aux bornes de la capacité d'intégration **402**. L'élément capacitif **407** mémorise le signal dans le pixel et autorise le début de l'intégration suivante pendant la lecture séquentielle. Il est ainsi possible d'intégrer les charges pendant la lecture séquentielle, ce qui permet un gain de temps pour la phase d'intégration.

Toutefois, l'ajout de tels composants, en particulier de l'élément capacitif **407,** augmente nécessairement l'encombrement du dispositif de lecture, ainsi que sa consommation énergétique.

Pour pallier partiellement ces inconvénients, on implante généralement un élément capacitif **407** de petites dimensions, donc de faible capacité, ainsi qu'un transistor **406** de taille réduite au minimum.

Cependant, un tel dimensionnement des composants **406** et **407** entraîne une dégradation du signal utile, c'est-à-dire du courant intégré, car il y a dilution du signal utile, augmentation du bruit et injection de charges non linéaires au niveau du transistor **406.**

La dilution du signal utile a pour valeur

$$1 - \frac{C_{402}}{C_{402} + C_{407}}, \text{ , où } C_{402} \text{ et } C_{407} \text{ sont les valeurs}$$

des capacités des éléments capacitifs **402** et **407** respectivement.

La contribution quadratique du bruit est par

ailleurs égale à $\dfrac{kT}{C_{407}}$, où T est la température et k la constante de Boltzmann.

Une telle dégradation du signal utile implique inévitablement une diminution du rapport signal sur bruit, donc des performances du photodétecteur équipé d'un tel étage d'entrée.

L'injection de charges non linéaires dégrade quant à elle la linéarité du signal utile lorsque la charge utile stockée dans l'élément capacitif **407** est petite.

Une autre solution connue pour assurer le blocage de l'intégration consiste à bloquer le transistor de polarisation pour définir un fenêtrage.

La figure 5 montre ainsi un étage d'entrée à injection directe, dont la fonction de fenêtrage est réalisée au moyen d'un transistor de polarisation **501,** dont la tension de commande ou de grille est de nature impulsionnelle. Ainsi, selon la forme de l'impulsion courante de la tension de polarisation, on réalise une commutation du courant à lire provenant du détecteur vers l'élément capacitif d'intégration **502**. Toutefois, une telle commutation du courant à lire présente deux inconvénients.

Tout d'abord, il y a une instabilité de la polarisation du capteur, sous l'effet des impulsions de la tension de polarisation.

En effet, l'étage d'entrée doit maintenir un potentiel le plus stable ou constant possible aux bornes du capteur, de manière à injecter efficacement les courants à lire dans le dispositif de lecture formant l'étage d'entrée.

Or, l'étage d'entrée illustré à la figure 5 ne permet pas de maintenir un potentiel stable aux bornes du capteur élémentaire, lorsque le transistor de polarisation est à l'état bloqué, c'est-à-dire en dehors de la phase d'intégration.

Par conséquent, les étages d'entrée de l'art antérieur utilisant un blocage du transistor de polarisation ne peuvent pas empêcher l'intégration de charges parasites au niveau de la capacité, charges parasites que possède inévitablement la diode formant le capteur élémentaire. Un capteur élémentaire présente généralement le comportement d'une diode possédant une capacité en parallèle, comme tout semi-conducteur.

Les charges parasites peuvent avoir diverses origines, parmi lesquelles on trouve le courant d'obscurité (en anglais « *dark curent* »), ou plus généralement les photons parasites reçus par les capteurs élémentaires, etc. Bien évidemment, de telles charges parasites entraînent une dérive de la différence de potentiel aux bornes du capteur élémentaire et, en conséquence, dégradent la linéarité qui constitue une performance essentielle pour qualifier tout photo-détecteur.

En outre, dans le cas du circuit de la figure 5, le transistor **501** réalisant la commutation, généralement de technologie MOS, injecte des charges parasites en quantité variable vers l'élément capacitif d'intégration **502**. Par conséquent, comme pour l'échantillonnage, cette architecture présente l'inconvénient de dégrader la linéarité du signal utile.

WO 02/51130 A, US 6 297 492 B1 et WO 99/60777 A divulguent des circuits de lecture connectés aux capteurs élémentaires.

Ces deux inconvénients sont particulièrement pénalisants si le circuit doit être utilisé en définissant plusieurs fenêtres d'intégration entre deux remises à zéro de la capacité d'intégration.

La présente invention a donc pour objectif de proposer un dispositif pour la lecture de courant permettant d'éviter les inconvénients que présentent les circuits intégrés des étages d'entrée de l'état antérieur de la technique, parmi lesquels on peut citer des variations dans la polarisation du capteur, voire sa dépolarisation, l'injection de charges parasites dans le circuit d'intégration, un encombrement important, une consommation d'énergie relativement forte, donc un échauffement par effet joule relativement élevé, la perte de temps nécessaire à une remise à zéro de la capacité d'intégration, le risque d'éblouissement ou, à l'inverse, le surcoût pour l'implantation de composants électroniques supplémentaires traitant ces différents problèmes.

EXPOSE DE L'INVENTION

La présente invention a donc pour objet un dispositif selon la revendication 1 et un procédé selon la revendication 4 pour réaliser la lecture de courants électriques, notamment issus de capteurs élémentaires matriciels, présentant une différence de potentiel relativement stable aux bornes des capteurs élémentaires, limitant l'injection de charges parasites dans le circuit d'intégration, présentant un encombrement relativement limité, consommant peu d'énergie, s'échauffant peu, peu sensible à l'éblouissement, et présentant une bonne linéarité et un rapport signal sur bruit élevé.

L'invention se rapporte ainsi à un dispositif pour réaliser la lecture de courants électriques reçus sur une branche d'entrée, notamment issus de capteurs élémentaires d'un dispositif matriciel de détection de rayonnements électromagnétiques. Le dispositif de lecture objet de l'invention comprend un élément capacitif destiné à intégrer le courant à lire. Selon l'invention, ce dispositif de lecture, ou étage d'entrée comprend en outre une paire différentielle composée :

- d'un premier transistor, monté entre la branche d'entrée et la capacité d'intégration (ou élément capacitif), ledit transistor étant commandé par une tension impulsionnelle polarisée, apte à placer ledit premier transistor alternativement à l'état bloqué puis à l'état passant, état passant dans lequel ledit premier transistor est destiné à fixer le potentiel de la branche d'entrée et à alimenter l'élément capacitif avec les courants à lire ;

- d'un second transistor, monté entre la branche d'entrée et un potentiel autre que celui de l'élément capacitif, ledit transistor étant également commandé par une tension impulsionnelle polarisée, apte à placer ledit second transistor alternativement à l'état bloqué puis à l'état passant, état passant dans lequel ledit second transistor est destiné à maintenir la branche d'entrée à un potentiel constant dans le temps autre que celui de l'élément capacitif et à écouler les charges reçues sur la branche d'entrée ailleurs que dans l'élément capacitif, et ledit second transistor étant commandé en opposition de phase par rapport au premier transistor.

En d'autres termes, l'étage d'entrée - objet de la présente invention, comporte une paire différentielle de transistors, commandée alternativement de manière à réaliser l'injection d'un courant dans l'élément capacitif d'intégration au cours de la phase dite d'intégration, tout en maintenant constante la tension de polarisation du capteur considéré, donc stable, au cours de la phase de lecture, également dénommée phase de mémorisation, c'est à dire, phase pendant laquelle ledit premier transistor est en mode bloqué. En raison de l'opposition de phase des tensions commandant les deux transistors, lorsque l'étage d'entrée est en phase de mémorisation, ledit second transistor est en mode passant, maintenant de fait la tension constante aux bornes du capteur considéré.

Le circuit intégré ainsi défini présente donc un nombre de composants limité à deux transistors, outre l'élément capacitif d'intégration.

On notera que dans leur état passant, les premier et second transistors maintiennent constante la tension de polarisation. Ceci signifie donc que les transistors ne se comportent pas comme des interrupteurs fermés puisque dans un tel état, un transistor se comporte comme une simple impédance (et donc comme un composant passif), et ne peut de ce fait fixer un potentiel. Afin de pouvoir fixer un potentiel, les transistors sont donc commandés dans leur état passant dit de « mode saturé », à la différence de l'état passant dit « de conduction » dans lequel un transistor se comporte comme un interrupteur fermé.

En pratique, les transistors sont de type MOS et peuvent être de type N ou P.

De tels transistors permettent au dispositif de lecture de courant de présenter des performances élevées, notamment en termes de linéarité de temps de réponse ou en consommation d'énergie.

Selon une autre forme de réalisation de l'invention, la branche d'entrée peut être connectée à un capteur élémentaire faisant partie d'un ensemble de capteurs élémentaires agencés en ligne ou en matrice.

Une telle caractéristique permet d'augmenter la linéarité de l'étage d'entrée d'un photodétecteur matriciel. En outre, cette structure permet de réaliser une multi-intégration, c'est-à-dire un découpage temporel des fenêtres d'intégration entre deux remises à zéro de la lecture.

Par ailleurs, l'invention concerne également un procédé pour la lecture de courants électriques, notamment issus de capteurs élémentaires d'un dispositif matriciel de détection de rayonnements électromagnétiques. Ce procédé met en œuvre un dispositif tel que précédemment mentionné et il comprend la séquence d'étapes suivantes :

- générer une première impulsion de tension, de préférence en forme de créneau, au moyen de la source de tension impulsionnelle polarisée ;
- placer le premier transistor à l'état passant de manière à alimenter l'élément capacitif avec le courant à lire, tandis que le deuxième transistor est placé à l'état bloqué ;
- générer une deuxième impulsion de tension en opposition de phase avec la première impulsion de tension, de préférence en forme de créneau, au moyen de la source de tension impulsionnelle polarisée ;
- placer le deuxième transistor à l'état passant de manière à maintenir la branche d'entrée à un potentiel constant, tandis que le premier transistor est placé à l'état bloqué, l'élément capacitif étant alors lu au travers de la branche de sortie du dispositif de manière à collecter les charges accumulées sur l'élément capacitif.

Un tel procédé permet donc de réaliser l'intégration des courants à lire en maintenant la polarisation du capteur constante.

Selon une forme de réalisation pratique de l'invention, le procédé peut consister à répéter la séquence d'étapes de manière à réaliser plusieurs phases d'intégration de courant dans l'élément capacitif, les phases au cours desquelles le premier transistor est placé à l'état bloqué et le second transistor est placé à l'état passant permettant l'évacuation des charges reçues sur la branche d'entrée par le second transistor de manière à obtenir la lecture de la somme des charges intégrées ainsi que les cumuls de charges intermédiaires.

Un tel procédé, qualifié de multi-intégration, permet de lire une grandeur analogique forte entre deux valeurs de cumul intermédiaire, et une grandeur analogique faible. Le fonctionnement et les avantages d'un tel procédé sont décrits dans la demande de brevet du Demandeur déposée sous le numéro FR-2006/50345.

Un tel procédé permet également l'intégration de multiples petites fenêtres pour des applications spécifiques.

Selon une forme de réalisation de l'invention, les amplitudes de la première et de la deuxième impulsions sont choisies de manière à ce qu'un transistor placé dans l'état bloqué est à la limite du déclenchement de l'état passant. De cette manière, le deuxième transistor se débloque sans dépolariser fortement le détecteur si le premier transistor ne peut plus écouler les charges en provenance des capteurs élémentaires. Une fonction anti-éblouissement efficace est ainsi mise en œuvre.

**BREVE DESCRIPTION DES DESSINS**

L'invention apparaîtra plus clairement à la lumière de la description des modes de réalisation particuliers suivants, qui font référence aux figures. L'objet de l'invention ne se limite cependant pas à ces modes particuliers de réalisation et d'autres modes de réalisation de l'invention sont possibles.

Les figures 1, 2, 3, 4 et 5 sont des représentations schématiques d'étages d'entrée de l'état antérieur de la technique, dont la description a été donnée ci-dessus.
La figure 6 est une représentation schématique d'un dispositif pour la lecture de courant conforme à une forme de réalisation de l'invention.
La figure 7 est une représentation schématique d'un graphique illustrant une forme de réalisation du procédé - objet de la présente invention, ainsi que le fonctionnement des étages d'entrée de l'art antérieur.
La figure 8 est une représentation schématique d'un graphique illustrant une autre forme de réalisation d'un procédé - objet de la présente invention, ainsi que le fonctionnement d'un étage d'entrée de l'art antérieur.

**DESCRIPTION DETAILLEE DE L'INVENTION**

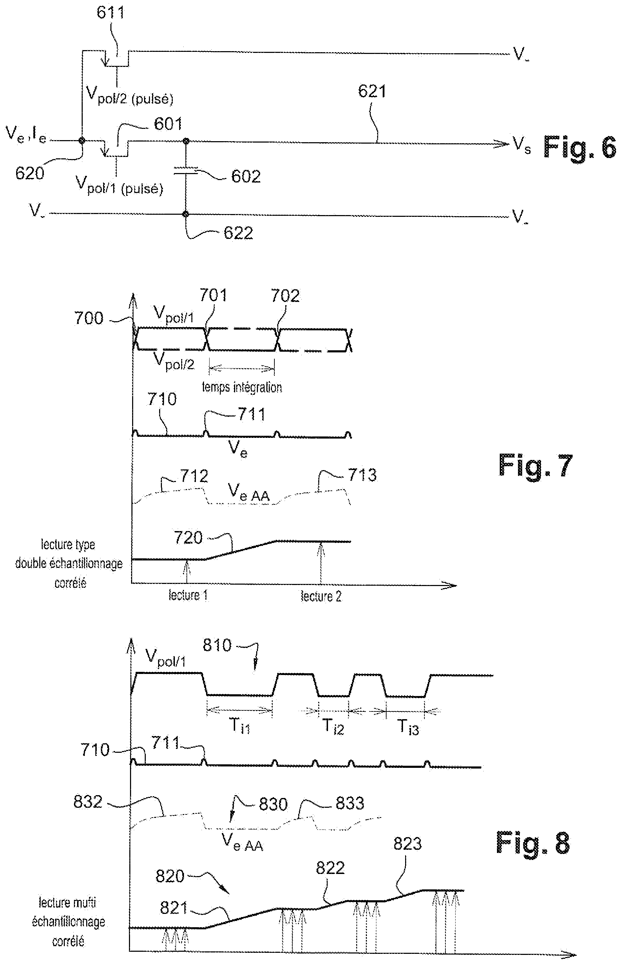

La figure 6 illustre donc un étage d'entrée conforme à une forme de réalisation de la présente invention.

Dans cet étage d'entrée, deux transistors MOS **601** et **611** de type P réalisés selon une technologie CMOS sont implantés de manière à définir une paire différentielle. Les premier et second transistors **601** et **611** sont donc montés sur deux branches parallèles, et ont pour point commun le noeud **620,** au niveau duquel est injecté le courant à lire $I_e$, qui représente le courant d'entrée issu d'un capteur, tel qu'une photodiode.

Selon l'invention, la source du premier transistor **601** est connectée à la branche d'entrée destinée à injecter le courant $I_e$ à lire. Le drain du premier transistor **601** est quant à lui connecté à la branche de sortie, par l'intermédiaire d'un nœud **621**. Le nœud **621** est donc porté au potentiel $V_s$, représentant la tension de sortie.

Conformément à l'invention, la grille du premier transistor **601** est connectée à une source de tension impulsionnelle polarisée (non représentée), apte à délivrer des impulsions de tension en forme de créneau **V$_{pol1}$, V$_{pol2}$**. Le premier transistor **601** est donc commandé par des créneaux de la tension de polarisation **V$_{pol1}$**.

Un élément capacitif d'intégration **602** est en outre connecté à la branche de sortie par l'intermédiaire du noeud **621,** tandis que son autre borne, représentée par le nœud **622,** est portée à une tension de référence **V$_-$**, en l'occurrence, celle de la masse. La borne **621** de l'élément capacitif **602** est donc portée au potentiel **V$_s$**. On pourrait néanmoins prévoir de mettre en oeuvre une autre tension de référence, dans la mesure où celle-ci se trouve à un potentiel stable, c'est-à-dire constant durant une certaine période de temps.

L'élément capacitif **602** est destiné à intégrer le courant à lire **I$_e$**, c'est-à-dire à accumuler les charges mobiles libérées lors des interactions entre photons et matière qui se produisent au sein de l'élément photosensible de chacun des capteurs élémentaires composant le photodétecteur matriciel. Le plus souvent, les charges mobiles injectées dans les circuits de lecture et d'exploitation sont des électrons, qui se dirigent vers l'anode de chaque capteur élémentaire, tandis que les trous se dirigent vers la cathode.

L'élément capacitif **602** est donc dimensionné en fonction de la quantité de charges maximales qu'il est destiné à recevoir. Ce dimensionnement dépend notamment de la valeur maximale de la dynamique de signaux, ou courants, issus du détecteur et du temps d'intégration. On entend par dynamique de signaux l'amplitude séparant le signal le plus faible détecté du signal le plus fort détecté, ce dernier correspondant généralement à la valeur de la grandeur analogique à intégrer saturant le détecteur. Les courants injectés **I$_e$** sont bien évidemment représentatifs de cette grandeur analogique.

La source du second transistor **611** est donc connectée au nœud commun **620,** tandis que son drain est relié à la masse **V$_-$**. A l'instar du premier transistor **601,** le second transistor **611** est commandé par la source de tension impulsionnelle polarisée **V$_{pol2}$** appliquée à sa grille.

Cependant, conformément à l'invention, le second transistor **611** est commandé par les impulsions qui se trouvent en opposition de phase par rapport à celles commandant le premier transistor **601**. Le second transistor **611** est donc commandé par la tension **V$_{pol2}$** qui se trouve en opposition de phase par rapport à la tension **V$_{pol1}$** commandant le premier transistor **601.**

Par conséquent, le second transistor **611** se trouve à l'état bloqué, quand le premier transistor **601** est placé à l'état passant, définissant ainsi la phase d'intégration. Réciproquement, le second transistor **611** se trouve à l'état passant lorsque le premier transistor **601** est à l'état bloqué, définissant ainsi la phase de lecture ou phase de mémorisation.

Ainsi, au cours de la phase d'intégration, le courant injecté **I$_e$**, issu de chaque capteur élémentaire, franchit le premier transistor **601** et accumule ses charges sur l'élément capacitif d'intégration **602**. Au cours de cette phase, aucun courant ne circule dans la deuxième branche comportant le second transistor **611**.

Au cours de la phase de lecture, ou de mémorisation, le premier transistor **601** est commandé à l'état bloqué par la source de tension, pendant que la quantité des charges mobiles accumulées sur l'élément capacitif **602** est fixe et peut être évaluée à partir du potentiel de la branche de sortie **621,** ou par un transfert de ces charges vers un amplificateur de sortie.

Il faut noter que, de manière connue, chaque capteur élémentaire présente un comportement électrique assimilable à celui d'une diode, présentant par conséquent une certaine capacité (non représentée). C'est cette capacité qui, dans les étages d'entrée de l'art antérieur, accumule des charges parasites, lesquelles viennent s'ajouter au signal utile au détriment de la linéarité.

Conformément à l'invention, au cours de cette phase de lecture, la branche d'entrée **620,** qui constitue la sortie de chaque capteur élémentaire, est maintenue à un potentiel constant par l'intermédiaire du second transistor **611** qui est lui commandé à l'état passant. Durant cette phase, les charges mobiles issues du capteur sont évacuées vers le potentiel **V$_-$** de la masse sans être comptabilisées.

Par conséquent, contrairement aux étages d'entrée de l'état antérieur de la technique, la tension de polarisation du détecteur reste constante et la capacité que représente chaque capteur élémentaire ne peut accumuler de charges parasites susceptibles d'être injectées dans l'étage d'entrée et donc d'entraîner une dérive au cours de la phase d'intégration suivante.

Ainsi, le signal utile n'est pas dégradé par des charges parasites accumulées sur le capteur lors des phases autres que l'intégration. La linéarité d'un photodétecteur équipé d'un dispositif de lecture de courant tel que celui représenté sur la figure 6 se trouve augmenté par rapport au photodétecteur équipé d'un étage d'entrée selon l'art antérieur.

De plus, cette amélioration de la linéarité est obtenue avec un nombre restreint de composants électroniques, en l'occurrence deux, si bien que l'encombrement et la consommation d'énergie sont également limités par rapport à ceux des dispositifs de l'art antérieur.

L'étage d'entrée conforme à la présente invention protège également le détecteur contre les fortes dépolarisations en cas d'éblouissement. En effet, lorsqu'il y a éblouissement, c'est-à-dire lorsque le transistor **601** n'est plus à même d'écouler les charges du détecteur, le transistor **611** peut écouler ces charges après une dépolarisation égale à la différence entre **V$_{pol1}$** et **V$_{pol2}$.**

En outre, l'encombrement réduit de l'étage d'entrée de l'invention permet de libérer de l'espace disponible pour la capacité d'intégration, et ainsi augmenter la quantité de charges stockables par pixel élémentaire.

La figure 7 représente un chronogramme illustrant le fonctionnement du dispositif représenté sur la figure 6 selon un procédé conforme à l'invention. La figure 7 présente donc les évolutions des tensions impulsionnelles polarisées $V_{pol1}$ et $V_{pol2}$, de la tension d'entrée $V_e$ mesurée au nœud **620** et de la tension de sortie $V_s$. De plus, la figure 7 présente en traits discontinus les variations de la tension d'entrée que l'on pourrait mesurer typiquement sur un étage d'entrée de l'art antérieur.

Conformément à une forme de réalisation de l'invention, les tensions de commande $V_{pol1}$ et $V_{pol2}$ sont en forme de créneaux, définissant les instants initiaux et finaux des phases d'intégration **701-702** et de lecture **700-701,** aussi appelée phase de maintien. Ces créneaux évoluent entre deux niveaux de tension, l'écart entre ces niveaux étant suffisant pour garantir le blocage d'un des transistors.

Les instants **700** et **702** représentent donc à la fois le début d'une phase de lecture et la fin d'une phase d'intégration. A l'inverse, l'instant **701** représente la fin d'une phase de lecture et le début d'une phase d'intégration.

Ainsi, dans la première étape du procédé objet de l'invention, la source de tension impulsionnelle polarisée (non représentée) génère un premier créneau de tension $V_{pol1}$. Au cours de cette phase d'intégration, le premier transistor **601** est alors placé à l'état passant de manière à alimenter l'élément capacitif **602** avec le courant $I_e$ à lire, tandis que le second transistor **611** est placé à l'état bloqué.

Comme le montre la figure 7, la phase d'intégration implique une augmentation de la tension de sortie représentée par la pente **720**. Cette pente **720** dépend principalement du courant $I_e$ du détecteur, et de la valeur de la capacité d'intégration.

Dans une étape suivante du procédé objet de l'invention, la source de tension impulsionnelle polarisée (non représentée) génère un deuxième créneau de tension en opposition de phase avec le premier. Le second transistor **611** est alors placé à l'état passant de manière à maintenir la branche d'entrée à un potentiel constant, tandis que le premier transistor **601** est placé à l'état bloqué. Les charges stockées dans l'élément capacitif **602** peuvent alors être lues au travers de la branche de sortie du dispositif.

La tension d'entrée $V_e$ est maintenue relativement stable, au cours de la phase de lecture, hormis les faibles excursions liées au basculement électronique des commandes sur les grilles **711**. Au contraire, la tension d'entrée $V_{eAA}$ de l'état de la technique, comme exposé ci-dessus, présente des dérives **712-713** importantes au cours des phases de lecture dues à l'accumulation de charges parasites dans la capacité du détecteur, sous l'effet des variations de la tension de polarisation des capteurs élémentaires.

La figure 8 représente un chronogramme illustrant le procédé dit de « multi-intégration ». Conformément à ce procédé, les phases d'intégration et de lecture s'enchaînent la tension de sortie $V_s$ présente des pentes successives **821-823** entrecoupées de plateaux durant lesquels la lecture de données stables est possible. En d'autres termes, la séquence d'étapes illustrée par la figure 7 est répétée pour réaliser de multiples intégrations comme cela est illustré par la figure 8. On réalise ainsi plusieurs phases de lecture, multipliant ainsi les données lues issues du détecteur.

En outre, ce procédé « multi-intégration » permet de choisir les périodes pendant lesquelles les charges issues du détecteur sont intégrées.

Sur la figure 8, la courbe **830** montre les dérives **832-833** de la tension d'entrée $V_{eAA}$ d'un étage d'entrée de l'art antérieur, dérives qui peuvent être annulées par une remise à zéro avant l'intégration suivante, au moyen d'un transistor de remise à zéro, tel que le transistor **305.** Or une telle remise à zéro empêche de cumuler des charges durant plusieurs phases d'intégration successives. Elle est donc incompatible avec la mise en œuvre d'un procédé de multi-intégration.

En outre, ce procédé de « multi-intégration » permet une mesure du courant du détecteur sur une fraction du temps d'intégration total. Ceci permet donc une lecture des courants les plus élevés et ainsi une augmentation de la dynamique du dispositif. Le rapport signal sur bruit est ainsi amélioré.

L'étage d'entrée selon l'invention représenté par les figures 6, 7 et 8 permet également une lecture du type « double échantillonnage corrélé » ou du type « multi «échantillonnage corrélée ».

Dans le premier type, une lecture de la valeur du signal au début et à la fin de l'intégration permet de supprimer le bruit engendré par la phase de remise à zéro, le signal obtenu étant extrait de la différence des valeurs lues.

Dans le second type, on généralise le premier type pour un nombre de lectures supérieur à deux. Le signal utile est obtenu par un traitement statistique des valeurs lues qui permet de supprimer le bruit engendré par la phase de remise à zéro, ainsi qu'une partie du bruit de lecture.

En conséquence, un dispositif pour la lecture de courant conforme à la présente invention permet d'éviter les inconvénients que présentent les étages d'entrée de l'art antérieur. Il présente une différence de potentiel relativement stable aux bornes du capteur élémentaire ; il permet de limiter l'injection de charges parasites dans le circuit d'intégration ; il présente en effet un encombrement relativement limité ; il consomme peu d'énergie ; il s'échauffe donc peu ;; il est peu sensible à l'éblouissement.

Ainsi, un détecteur de rayonnements électromagnétiques, tel qu'une diode photodétectrice, équipé d'un étage d'entrée présentant tous ces avantages, possède une linéarité et un rapport signal sur bruit supérieurs.

**Revendications**

1. Dispositif matriciel de détection comportant un dispositif matriciel composé de capteurs élémentaires agencés en ligne ou en matrice et un circuit de lecture connecté à chacun des capteurs élémentaires pour réaliser la lecture d'un courant électrique issu de ceux-ci ; le circuit de lecture comprenant une branche d'entrée (620) connectée aux capteurs élémentaires et un élément capacitif (602) destiné à intégrer le courant (le) issu des capteurs élémentaires, les bornes dudit élément capacitif (602) étant connectées respectivement à la masse (V-) et à une branche de sortie (621) dudit circuit de lecture, *caractérisé* **en ce que** le circuit de lecture comprend en outre :

    - une paire différentielle de transistors (601, 611) composée :

        o d'un premier transistor MOS (601), dont la source est connectée à la branche d'entrée (620) et dont le drain est connecté à la borne de l'élément capacitif (602) connectées à la branche de sortie (621), le premier transistor (601) étant placé à l'état bloqué lorsqu'une première valeur de tension (Vpol/1) est appliquée à sa grille et dans l'état passant du mode saturé lorsqu'une seconde valeur de tension (Vpol/2) est appliquée sa grille; et
        o d'un second transistor MOS (611) de même type que le premier transistor, dont la source est connectée à la branche d'entrée (620) et dont le drain est connecté à un potentiel autre que celui de l'élément capacitif (602), le second transistor (611) étant placé à l'état bloqué lorsque la première valeur de tension (Vpol/1) est appliquée à sa grille et dans l'état passant du mode saturé lorsque la seconde valeur de tension (Vpol/2) est appliquée à sa grille ;

    - un circuit de polarisation connecté aux grilles des premier et second transistors (601, 611), ledit circuit de polarisation étant configuré pour appliquer à la grille du premier transistor (601), une première tension impulsionnelle polarisée distribuée entre la première valeur de tension (Vpol/1) et la seconde valeur de tension (Vpol/2), et pour appliquer à la grille du second transistor (611), une seconde tension impulsionnelle polarisée distribuée entre la première valeur de tension (Vpol/1) et la seconde valeur de tension (Vpol/2), la seconde tension prenant la première valeur de tension (Vpol/1) lorsque la première tension prend la seconde valeur de tension (Vpol/2), et la seconde tension prenant la seconde valeur de tension (Vpol/2) lorsque la première tension prend la première valeur de tension (Vpol/1) ;

    et **en ce que** le circuit de polarisation est configuré pour appliquer :

        - pendant une phase de lecture, à la grille du premier transistor (601), la première valeur de tension (Vpol/1) pour stopper l'intégration du courant (le) issu des capteur élémentaires dans l'élément capacitif (602) et pour lire la tension aux bornes de ce dernier, et, à la grille du second transistor (611), la deuxième valeur de tension (Vpol/2) pour maintenir les capteur élémentaires à une tension constante ; et
        - pendant une phase d'intégration, à la grille du premier transistor (601), la deuxième valeur de tension (Vpol/2) pour intégrer le courant (le) issu des capteur élémentaires dans l'élément capacitif (602) tout en maintenant les capteur élémentaires à la tension constante, et, à la grille du second transistor (611), la première valeur de tension (Vpol/1) pour stopper le passage de courant dans ce transistor.

2. Dispositif selon la revendication 1 ou 2, *caractérisé* **en ce que** la première valeur de tension ($V_{pol/1}$) est choisie de manière à placer les premier et second transistors (601, 611) dans un état bloqué à la limite de leur déclenchement dans l'état passant du mode saturé.

3. Dispositif pour réaliser la lecture de courants électriques selon la revendication 1 ou 2, *caractérisé* **en ce que** le dispositif matriciel de détection est un détecteur bolométrique refroidi.

4. Procédé pour réaliser la lecture de courants électriques, tels que ceux issus des capteurs élémentaires d'un dispositif matriciel de détection de rayonnements électromagnétiques, *caractérisé* **en ce qu'**il met en œuvre un circuit de lecture selon l'une des revendications précédentes et **en ce qu'**il comprend la séquence d'étapes suivantes :

        - générer une première impulsion de tension ($V_{pol1}$), de préférence en forme de créneau, au moyen de la source de tension impulsionnelle polarisée ($V_{pol1}, V_{pol2}$) ;
        - placer le premier transistor (601) à l'état passant du mode saturé de manière injecter un courant ($I_e$) à lire apte à charger l'élément capacitif (602), tandis que le second transistor (611) est placé à l'état bloqué ;
        - générer une deuxième impulsion ($V_{pol2}$) en opposition de phase avec ladite première impulsion ($V_{pol1}$), de préférence en forme de créneau, au moyen de la source de tension impulsionnelle polarisée ($V_{pol1}$), $V_{pol2}$) ;

- placer le second transistor (611) à l'état passant du mode saturé de manière à maintenir la branche d'entrée (Ve, 620) à un potentiel constant, tandis que le premier transistor (601) est placé à l'état bloqué, l'élément capacitif (602) étant alors lu au travers de la branche de sortie (Vs, 621) de façon séquentielle.

**5.** Procédé pour réaliser la lecture de courants électriques selon la revendication 4, *caractérisé* **en ce qu'**il consiste à répéter ladite séquence d'étapes de manière à réaliser plusieurs phases d'intégration de courant dans l'élément capacitif (602), les phases au cours desquelles le premier transistor (601) est placé à l'état bloqué et le second transistor (611) est placé à l'état passant du mode saturé permettant l'évacuation des charges reçues sur la branche d'entrée (620) par le second transistor (611) de manière à obtenir la lecture de la somme des charges intégrées ainsi que les cumuls de charges intermédiaires.

**6.** Procédé pour réaliser la lecture de courants électriques selon la revendication ou 5, *caractérisé* **en ce que** les amplitudes de la première et de la deuxième impulsions sont choisies de manière à ce qu'un transistor placé dans l'état bloqué est à la limite du déclenchement de l'état passant du mode saturé.

**Patentansprüche**

**1.** Matrix- Detektor mit einer Matrix- Vorrichtung , bestehend aus in Reihe oder in der Matrix angeordneten Elementarsensoren und einer Leseschaltung, die mit jedem der Elementarsensoren verbunden ist, zur Durchführung der Ablesung eines aus diesen hervorgegangenen elektrischen Stroms; die Leseschaltung umfasst dabei einen mit den Elementarsensoren verbundenen Eingangszweig (620) und ein kapazitives Element (602), vorgesehen zur Integration des aus den Elementarsensoren Sensoren stammenden Stroms (Ie), die Klemmen diese kapazitiven Elementes (602) sind jeweils mit der Masse (V-) und einem Ausgangszweig (621) dieser Leseschaltung, verbunden, **dadurch gekennzeichnet, dass** die Leseschaltung außerdem umfasst:

- ein differentielles Transistorpaar (601, 611), bestehend aus

o einem ersten Transistor MOS (601), dessen Quelle mit dem Eingangszweig (620) verbunden ist und dessen Drain mit der Klemme des mit dem Ausgangszweig (621) verbundenen kapazitiven Elementes (602) verbunden ist, der erste Transistor (601) wird in den gesperrten Zustand versetzt, wenn ein erster Spannungswert (Vpol/1) an sein Gitter angelegt wird und in den Übergangszustand in den gesättigten Modus, wenn ein zweiter Spannungswert (Vpol/2) an sein Gitter angelegt wird und

o einem zweiten Transistor MOS (611) desselben Typs wie der erste Transistor, dessen Quelle mit dem Eingangszweig (620) verbunden ist und dessen Drain mit einem anderen Potential als dem des kapazitiven Elementes (602) verbunden ist, der zweite Transistor (611) wird in den gesperrten Zustand versetzt, wenn ein erster Spannungswert (Vpol/1) an sein Gitter angelegt wird und in den Übergangszustand in den gesättigten Modus, wenn der zweite Spannungswert (Vpol/2) an sein Gitter angelegt wird;

- eine Polarisationsschaltung, verbunden mit den Gittern des ersten und zweiten Transistors (601, 611), wobei diese Polarisationsschaltung dazu konfiguriert ist, an das Gitter des ersten Transistors (601) eine erste polarisierte Impulsspannung anzulegen, verteilt zwischen dem ersten Spannungswert (Vpol/1) und dem zweiten Spannungswert (Vpol/2), und um an das Gitter des zweiten Transistors (611) eine zweite polarisierte Impulsspannung, verteilt zwischen dem ersten Spannungswert (Vpol/1) und dem zweiten Spannungswert (Vpol/2) anzulegen, die zweite Spannung übernimmt dabei den ersten Spannungswert (Vpol/1), wenn die erste Spannung den zweiten Spannungswert (Vpol/2) übernimmt, und die zweite Spannung übernimmt den zweiten Spannungswert (Vpol/2), wenn die erste Spannung den ersten Spannungswert (Vpol/1) übernimmt

*und dadurch dass* die Polarisationsschaltung konfiguriert ist, zum Anlegen:

- während einer Lesephase des ersten Spannungswertes (Vpol/1) am Gitter des ersten Transistors (601), um die Integration des aus den Elementarsensoren im kapazitiven Element (602) stammenden Strom (I1) zu stoppen und die Spannung an dessen Klemmen zu lesen und am Gitter des zweiten Transistors (611), des zweiten Spannungswertes (Vpol/2), um die Elementarsensoren unter einer konstanten Spannung zu halten; und
- während einer Integrationsphase am Gitter des ersten Transistors (601), den zweiten Spannungswert (Vpol/2) anzulegen, zur Integration des aus den Elementarsensoren im kapazitiven Element (602) stammenden Stroms (I1) und dabei die Elementarsensoren unter einer konstanten Spannung zu halten;, und am Gitter des zweiten Transistors (611), den ersten Spannungswert (Vpol/1) um den Stromdurchfluss in diesem Transistor zu stoppen.

2. Vorrichtung nach Anspruch 1 oder 2, *dadurch gekennzeichnet, dass* der erste Spannungswert (Vpol/1) so ausgewählt wird, dass der erste und der zweite Transistor (601, 611) in einen gesperrten Zustand versetzt werden, bis zur Grenze ihres Auslösens des Übergangszustandes in den gesättigten Modus,

3. Vorrichtung zur Durchführung des Ablesens elektrischer Ströme nach Anspruch 1 oder 2, *dadurch gekennzeichnet, dass* es sich bei dem Matrix- Detektor um einen gekühlten, bolometrischen Detektor handelt.

4. Vorrichtung zur Durchführung des Ablesens elektrischer Ströme, wie denjenigen, die aus den Elementarsensoren eines Matrix- Detekors elektromagnetischer Strahlen stammen, *dadurch gekennzeichnet, dass* dabei eine Leseschaltung nach einem der vorangehenden Ansprüche eingesetzt wird, und dass sie eine Sequenz der folgenden Schritte enthält:

- Erzeugung eines ersten Spannungsimpulses ($V_{pol1}$), vorzugsweise nischenförmig, mittels der polarisierten Impulsspannungsquelle (($V_{pol1}$, $V_{P012}$);
- den ersten Transistor (601) in den Übergangszustand des gesättigten Modus zu versetzen, so dass ein abzulesender Strom (Ie) eingespeist wird, der in der Lage ist, das kapazitive Element (602) zu laden, während der zweite Transistor (611) in den gesperrten Zustand versetzt wird;
- Erzeugung eines zweiten Impulses ($V_{P012}$) mit einer entgegengesetzten Phase zum ersten Impuls (($V_{pol1}$),, vorzugsweise nischenförmig, mittels der polarisierten Impulsspannungsquelle ($V_{pol1}$)"$V_{P012}$);
- Versetzen des zweiten Transistors (611) in den Übergangszustand in den gesättigten Modus, so dass der Eingangszweig (Ve, 620) auf einem konstanten Potential gehalten wird, während der erste Transistor (601) in den gesperrten Zustand versetzt wird, das kapazitive Element (602) wird dann über den Ausgangszweig (Vs, 621) sequentiell abgelesen.

5. Verfahren zur Durchführung des Ablesens elektrischer Ströme nach Anspruch 4, *dadurch gekennzeichnet, dass* es darin besteht, diese Schrittsequenz zu wiederholen, so dass mehrere Integrationsphasen des Stroms in das kapazitive Element (602) durchgeführt werden, die Phasen in denen der erste Transistor (601) in den gesperrten Zustand versetzt wird und der zweite Transistor (611) in den Übergangszustand in den gesättigten Modus, der die Ableitung der am Eingangszweig (620) durch den zweiten Transistor (611) empfangenen Ladungen erlaubt, so dass die Summe der integrierten Ladungen, sowie die Zusammenfassungen der Zwischenladungen abgelesen werden können.

6. Verfahren zur Durchführung des Ablesens elektrischer Ströme nach Anspruch oder 5, *dadurch gekennzeichnet, dass* die Amplituden des ersten und des zweiten Impulses so ausgewählt werden, dass ein in den gesperrten Zustand versetzter Transistor, sich an der Grenze zum Auslösen des Übergangszustand des gesättigten Modus befindet.

**Claims**

1. Matrix device for detecting electromagnetic radiation comprising a matrix device including elementary sensors arranged in a line or in a matrix and a read-out circuit connected to each elementary sensor for reading an electric current issuing from the later, the read-out circuit comprising an input branch (620) connected to the elementary sensors and a capacitive element (602) intended to integrate the current ($I_e$) issuing from the elementary sensors, the terminals of said capacitive element (602) being connected to the mass (V-) and to an output branch (621) of said circuit respectively, *characterized* in that the read-out circuit further comprises :

• a differential pair of transistors (601, 611), consisting of:

▪ a first MOS transistor (601), which source is connected to the input branch (620), and which drain is connected to the terminal of the capacitive element (602) connected to the output branch (621), the first transistor (601) being in off-state mode when a first voltage ($V_{pol1}$) is applied to its gate, and in saturated on state mode when a second voltage ($V_{pol2}$) is applied to its gate; and
▪ a second MOS transistor (611) of the same type as that of the first transistor, which source is connected to the input branch (620), and which drain is connected to a voltage different from that of the capacitive element (602), the second transistor (611) being in off-state mode when the first voltage ($V_{pol1}$) is applied to its gate, and in saturated on state mode when the second voltage ($V_{pol2}$) is applied to its gate ;

• a polarization circuit connected to the gates of the first and second transistors (601, 611), said polarization circuit being configured for applying to the gate of the first transistor (601) a first polarized impulse voltage allocated between the first voltage ($V_{pol1}$) and the second voltage ($V_{pol2}$), and for applying to the gate of the second transistor (611) a second polarized impulse voltage allocated between the first voltage ($V_{pol1}$) and the second voltage ($V_{pol2}$), the second voltage corresponding to the first voltage ($V_{pol1}$) when the first voltage corresponds to second voltage ($V_{pol2}$), and the second voltage corresponding to the second voltage ($V_{pol2}$) when the first voltage corresponds to the first voltage ($V_{pol1}$);

and **in that** the polarization circuit is configured for applying :

• during a reading phase, to the gate of the first transistor (601), the first voltage ($V_{pol1}$) to stop the integration of current ($I_e$) issuing from the elementary sensors in the capacitive element (602) and to read the voltage at the terminals of the later, and, to the gate of the second transistor (611), the second voltage ($V_{pol2}$) to maintain the elementary sensors at a constant voltage ; and
• during an integration phase, to the gate of the first transistor (601), the second voltage ($V_{pol2}$) to integrate the current ($I_e$) issuing from the elementary sensors in the capacitive element (602) while maintaining the elementary sensors at a constant voltage, and, at the gate of the second transistor (611), the first voltage ($V_{pol1}$) to block the current in said transistor.

2. Device as claimed in claim 1, ***characterized* in that** the first voltage ($V_{pol1}$) is selected in order to place said first and second transistor (601, 611) in off-state mode on the verge of triggering to the saturated on state mode of said transistors.

3. Device as claimed in one of claims 1 and 2, ***characterized* in that** the matrix device is a cooled bolometric detector.

4. Method for reading electric currents, such as those coming from elementary sensors of a matrix device for detecting electromagnetic radiation, ***characterized* in that** it implements a read-out circuit as claimed in one of the previous claims and **in that** it comprises the following step sequence:

- generating a first voltage pulse ($V_{pol1}$), preferably in the form of a square pulse, using the polarized impulse voltage source ($V_{pol1}$, $V_{pol2}$);
- putting the first transistor (601) into the saturated on state mode in order to inject a current ($I_e$) for reading capable of charging the capacitive element (602), while the second transistor (611) is put into the off state mode;
- generating a second pulse ($V_{pol2}$) in phase opposition with said first pulse ($V_{pol1}$), preferably in the form of a square pulse, using the polarized impulse voltage source ($V_{pol1}$, $V_{pol2}$) ;
- putting the second transistor (611) into the saturated on state mode in order to keep the input branch (Ve, 620) at a constant potential, while the first transistor (601) is put into the off state mode, the capacitive element (602) then being read across the output branch (Vs, 621) sequentially.

5. Method for reading electric currents as claimed in claim 4, ***characterized* in that** it comprises repeating said step sequence in order to obtain a plurality of phases of integrating current into the capacitive element (602), the phases during which the first transistor (601) is put into the off state mode and the second transistor (611) is put into the saturated on state mode allowing the evacuation of the charges received on the input branch (620) by the second transistor (611) in order to read the total amount of the integrated charges as well as the intermediate charge build-ups.

6. Method for reading electric currents as claimed in claim 4 or 5, ***characterized* in that** the amplitudes of the first and second pulses are selected in such a way that a transistor put into the off state mode is on the verge of triggering the saturated on state mode.

101

$V_e, I_e$ ⟶ ⟶ $V_s$

$V_{pol}$

102

$V_-$ ⟶ $V_-$

# Fig. 1

201                                    203

$V_e, I_e$ ⟶ ⟶ $V_s$

$V_{pol}$                              $V_{sel}$

202

$V_-$ ⟶ $V_-$

# Fig. 2

301                          305                    304

$V_e, I_e$ ⟶ ⟶ $V_s$

$V_{pol}$    302      $V_{RAZ}$              $V_{AE}$

$V_-$ ⟶ $V_-$

# Fig. 3

401        402          405    406        407

$V_e, I_e$ ⟶ ⟶ $V_s$

$V_{pol}$          $V_{RAZ}$    $V_{sel}$
                   $+V_{AE}$

$V_-$ ⟶ $V_-$

# Fig. 4

501

$V_e, I_e$ ⟶ ⟶ $V_s$

$V_{pol}$ (pulsé)      502

$V_-$ ⟶ $V_-$

# Fig. 5

**Fig. 6**

**Fig. 7**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0251130 A
- US 6297492 B1
- WO 9960777 A
- FR 200650345